# EUROPÄISCHE PATENTSCHRIFT

(11) **EP 1 999 025 B1**
(45) Veröffentlichungstag und Bekanntmachung des Hinweises auf die Patenterteilung: **06.06.2012**
(21) Anmeldenummer: 07723230.4
(22) Anmeldetag: 14.03.2007
(51) Int. Cl.: B65C 9/18, B65H 20/02

(54) **VERFAHREN UND VORRICHTUNG ZUM TRANSPORTIEREN VON ETIKETTENBÄNDERN**
METHOD AND APPARATUS FOR TRANSPORTING LABEL STRIPS
PROCEDE ET DISPOSITIF POUR TRANSPORTER DES BANDES D'ETIQUETTES

(30) Priorität: 18.03.2006 DE 102006012756
(43) Veröffentlichungstag der Anmeldung: 10.12.2008
(73) Patentinhaber: Krones AG, 93073 Neutraubling (DE)
(72) Erfinder: HAFNER, Dieter, 93051 Regensburg (DE); ROIDL, Wolfgang, 93180 Deuerling (DE)
(74) Vertreter: Bittner, Bernhard
(86) Internationale Anmeldenummer: PCT/EP2007/002220
(87) Internationale Veröffentlichungsnummer: WO 2007/107267

(56) Entgegenhaltungen:
- EP-A- 0 036 193
- DE-A1- 2 702 822
- FR-A- 2 679 518
- US-A- 3 321 105
- US-A- 3 619 326
- US-A- 4 403 719
- US-A- 5 531 853
- US-A1- 2004 089 127

## Beschreibung

Die Erfindung betrifft eine Vorrichtung zum Transportieren eines Etikettenbandes gemäß dem Oberbegriff des Anspruchs 1 sowie ein Verfahren zum Transportieren eines Etikettenbandes gemäß dem Oberbegriff des Anspruchs 13. Eine derartige Vorrichtung ist aus US 3 619 326 A bekannt.

Es gibt verschiedenste Arten zum Etikettieren von Behältern, wie z. B. das Rundumetikettieren mit Etikettenstreifen von der Rolle oder aus einem Etikettenmagazin, oder das Etikettieren mit Selbstklebeetiketten, wobei letztere Variante hauptsächlich für hochwertige Etikettiervorgänge verwendet wird. Mit dem Etikettieren mit Selbstklebeetiketten ist z.B. das Erzeugen eines sogenannten "no label look" möglich. Dabei werden die Randbereiche des Etiketts möglichst durchsichtig gestaltet, um auf dem Etikettierten Behälter nur die Information, nicht aber das Etikett an und für sich zu sehen.

Das Etikettieren mit Selbstklebeetiketten ist in der Regel etwas teuerer als das Etikettieren mit anderen Verfahren, durch die hohe Qualität und die großen Gestaltungsmöglichkeiten erfreut sich diese Variante aber immer größerer Beliebtheit.

Es gab daher in den letzten Jahren einige Entwicklungen, die das Hochgeschwindigkeitsetikettieren mit Selbstklebeetiketten vorantrieben. Moderne Etikettiermaschinen für Selbstklebeetiketten, wie sie z.B. aus der US 2003121593 bekannt sind, weisen eine automatische Spleißstation für Etikettenbänder auf, um die Stillstandszeiten der Maschinen beim Wechsel der Etikettenbandrollen zu minimieren bzw. zu eliminieren.

Ein Problem bei solchen Maschinen ist es jedoch, dass zwar die Stillstandszeiten bezüglich der Etikettenbandzufuhr minimiert bzw. eliminiert wurden, jedoch muss das leere Trägerband nach dem Etikettieren abgeführt und gespeichert werden. Bisher erfolgt die Abfuhr und Speicherung des leeren Trägerbandes auf einer Rolle wie dies in der EP 1619129 A1 gezeigt ist. Wenn der Etikettenleerbandspeicher - hier in Form einer Rolle - voll ist, muss dieser gewechselt werden. Es entsteht also die Situation, dass zwar bezüglich der Etikettenzuführung die Stillstandszeit der Maschinen minimiert werden konnte, bezüglich der Trägerbandabfuhr aber immer noch Maschinenstillstandszeiten beim Wechsel der Etikettenleerbandspeicher in Kauf genommen werden müssen.

Es ist deshalb Aufgabe der vorliegenden Erfindung, eine Transportvorrichtung für Etikettenbänder bzw. ein Verfahren zu schaffen, mit der/dem es möglich ist, einen schnellen und sicheren Abtransport eines Trägerbandes vorzunehmen.

Diese Aufgabe bezüglich der Vorrichtung wird gelöst durch die Merkmale des Anspruchs 1, bezüglich des Verfahrens durch die Merkmale des Anspruchs 13.

Gemäß einer bevorzugten Weiterbildung der Erfindung wird eine Walze über einen eigenen Motor angetrieben. Dies hat den Vorteil, dass der Transport des Etikettenbandes das an der angetriebenen Walze anliegt, sehr exakt erfolgen kann. Die zweite Walze wird vorzugsweise indirekt über die erste Walze angetrieben, entweder indem ein Riemen, ein Zahnriemen oder dgl. die beiden Walzen verbindet, oder vorzugsweise indem sich die beiden Walzen berühren, so dass die zweite Walze auf Grund der Abrollbewegung der ersten an der zweiten Walze bewegt wird. Es ist jedoch auch denkbar, dass jede Walze ihren eigenen Motor aufweist, so dass eine noch exaktere Kraftaufbringung auf das abzutransportierende Trägerband erfolgen kann.

Die Nuten in den Walzen sind vorzugsweise in Umfangsrichtung angebracht. Zumindest die restliche Oberfläche ist mit einer Oberflächenstruktur bzw. einer Beschichtung versehen, oder besteht aus einem Material, das einen so hohen Reibungskoeffizienten bezüglich des Trägerbandes aufweist, dass ein störungs- und schlupffreier Transport des Trägerbandes stattfinden kann. Gemäß einer bevorzugten Weiterbildung der Erfindung weist eine Walze eine Gummibeschichtung auf, um diese Erfordernisse des schlupffreien Transports zu erfüllen. Gemäß einer besonders bevorzugten Weiterbildung der Erfindung ist die andere Walze aus Metall, vorzugsweise Stahl, und weist eine geriffelte bzw. eine mit einer Struktur versehenen Oberfläche auf.

Durch diese Kombination der Berührung der beiden Walzen, der Gummibeschichtung der einen Walze einerseits und der geriffelten Metallwalze andererseits kann ein optimaler, störungs- und schlupffreier Transport des Trägerbandes erfolgen.

Gemäß einer bevorzugten Weiterbildung der Erfindung weist eine Walze ein Abweiselement, besonders bevorzugt weisen beide Walzen je ein Abweiselement auf. Ein solches Abweiselement ist vorzugsweise als Rechen ausgebildet, der die Walzen zumindest teilumfänglich umgibt, wobei sich die Finger der Rechen vorzugsweise in den Nuten befinden. Diese Abweiselemente haben den Vorteil, dass eventuelle Rückstände auf dem Trägerband - wie z.B. nicht abgelöste Etiketten ― nicht auf eine der Walzen aufgewickelt werden und dadurch Störungen verursachen. Durch die Abweiselemente bleiben die Rückstände vom Trägerband entweder auf diesem Haften, oder sie bleiben an dem Abweiselement haften, was aber für den weiteren Transportvorgang kein Problem darstellt. Durch die Abweiselemente bleibt also sichergestellt, dass die Oberflächeneigenschaften der Walzen nicht durch Rückstände verändert werden. Dadurch bleibt der einwandfreie Transport des Trägerbandes gewährleistet.

Die Vorrichtung der Erfindung weist eine Bandleiteinrichtung auf, die es ermöglicht, das Trägerband stromabwärts der beiden Nutwalzen weiterzuführen. Die Bandleiteinrichtung ist ein Kanal, der das Trägerband eng führt und somit eine definierte Abgabe an den Etikettenleerbandspeicher ermöglicht.

Um eine statische Aufladung des Trägerbandes zu verhindern, bzw. um diese zumindest teilweise abzubauen, ist es denkbar, eine Vorrichtung zur Vermeidung/Abbau von statischer Aufladung in der Nähe der Transportvorrichtung zu befestigen. Eine solche Vorrichtung kann z.B. eine Blasvorrichtung sein, die ionisierte Luft in Richtung des Trägerbandes und / oder der Bandleiteinrichtung transportiert.

Die Bandleiteinrichtung ist vorzugsweise als Halter für einen Etikettenleerbandspeicher ausgebildet. So ist es z. B. vorstellbar, dass der Etikettenleerbandspeicher von einem Sack gebildet wird, in den das Trägerband durch die beiden Nutwalzen eingeführt wird. In einem solchen Fall kann die Bandleiteinrichtung als Sackhalter ausgebildet sein, so dass sie zwei Funktionen, nämlich zum Einen das Leiten des Trägerbandes und zum Anderen das Halten des Sackes ausführt.

Der Etikettenleerbandspeicher kann aber auch in anderer Weise ausgeführt sein, so z. B. in Form eines großen Korbes oder einer großen Schachtel, in die das Trägerband durch die Führung der Bandleiteinrichtung z. B. mäanderförmig gespeichert wird. Dazu ist es auch vorstellbar, dass die Bandleiteinrichtung beweglich ausgeprägt ist, um diese mäanderförmige Speicherung durch Bewegung der Bandleiteinrichtung besser bewerkstelligen zu können.

Eine besonders bevorzugte Weiterbildung der Vorrichtung besteht darin, dass stromabwärts der beiden Nutwalzen ein Wechselrahmen befestigt ist, der zumindest zwei Bandleiteinrichtungen aufweist. Dabei ist aber jeweils nur eine Bandleiteinrichtung mit den Nutwalzen in Wirkzusammenhang. Der Wechselrahmen ist vorzugsweise mit einem Handgriff ausgestattet, der es erlaubt, seine Verschiebung derart vorzunehmen, dass zwischen Positionen gewechselt werden kann, in denen jeweils eine andere Bandleiteinrichtung in Wirkzusammenhang mit den beiden Nutwalzen steht. Im Falle des Verwendens eines Sackes oder einer Kiste oder dgl. als Etikettenleerbandspeicher kann auf Grund des Wechselrahmens ein einfaches Umschalten von einem Etikettenleerbandspeicher in einen anderen Etikettenleerbandspeicher erfolgen. Auf diese Weise ist gewährleistet, dass bezüglich des Trägerbandabtransports eine quasi endlose Benutzung der Etikettiermaschine ermöglicht ist.

Vorzugsweise weist der Wechselrahmen pro Bandleiteinrichtung mindestens ein Schneidelement und / oder Gegenelement auf, das bei der Betätigung des Wechselrahmens mit dem Trägerband derart zusammenwirkt, dass ein Abschneiden desselben erfolgt.

Obwohl die Vorrichtung extrem störungssicher ist, ist es möglich, zumindest eine Nutwalze derart beweglich anzubringen, dass sie von der anderen Nutwalze entfernt werden kann, um z.B. Störungen in Form von Restetiketten auf den Abweiselementen zu beseitigen.

Eine bevorzugte Weiterbildung des Verfahrens erfolgt derart, dass das Etikettenleerband / Trägerband von einer Spendekante in Richtung der Abtransporteinrichtung transportiert wird, wobei dort die Nutwalzen den Transport des Etikettenleerbandes / Trägerbandes über die Bandleiteinrichtung in den Etikettenleerbandspeicher vornehmen. Ist ein Etikettenleerbandspeicher voll, so wird der Wechselrahmen betätigt, so dass eine zweite Bandleiteinrichtung in Wirkzusammenhang mit den beiden Nutwalzen steht und das Etikettenleerband nun über eine zweite Bandleiteinrichtung in einen neuen Etikettenleerbandspeicher abtransportiert werden kann. Dabei versteht sich von selbst, dass je größer der Etikettenleerbandspeicher ist, desto länger kann ein Abtransport des Etikettenleerbandes in den Etikettenleerbandspeicher erfolgen, ohne dass zu einem neuen Etikettenleerbandspeicher gewechselt werden muss. Unter anderem aus dieser Tatsache ergibt sich, dass bezüglich der Etikettenleerbandspeicher keine Beschränkungen bestehen und somit jedes denkbare Speichermedium verwendet werden kann.

Eine konkrete Ausgestaltung der Erfindung wird anhand der nachfolgenden Figuren näher erläutert.

Dabei zeigt:
- Figur 1: eine Draufsicht auf ein Etikettieraggregat für Selbstklebeetiketten,
- Figur 2: eine Seitenansicht einer Vorrichtung zum Transport eines Etikettenleerbandes,
- Figur 3: eine isometrische Ansicht einer solchen Vorrichtung und
- Figur 4: eine Draufsicht auf zwei Nutwalzen.

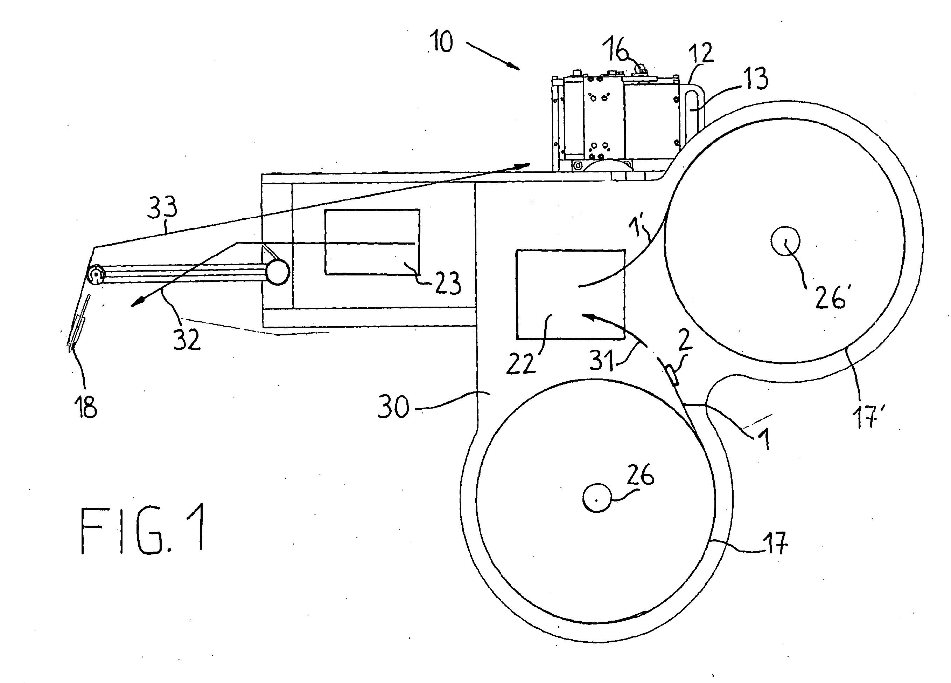

Figur 1 zeigt ein Etikettieraggregat für Selbstklebeetiketten, wie es an einer Etikettiermaschine befestigt sein kann, mit einem Tisch 30, auf dem sich zwei Speicherrollen 17 befinden, die jeweils aus einem Rollenkern 26 und aus einem um diesen gewickelten Trägerband 1 mit den Etiketten 2 besteht. An der Speicherrolle 17 ist exemplarisch ein Trägerband 1 mit einem sich darauf befindlichen Etikett 2 zu sehen.

Das Trägerband 1 mit den Etiketten 2 wird in Richtung des Pfeils 31 durch eine Spleißstation 22 zu einem Etikettenbandspeicher 23 geführt. In der Spleißstation 22 befindet sich zudem ein vorbereitetes Trägerband 1' auf einer Speicherrolle 17', das mit dem Trägerband 1 verspleißt wird, sobald die Speicherrolle 17 zu Ende geht. Auf diese Weise ist ein quasi endloses Etikettieren von Behältern möglich.

Der Etikettenbandspeicher 23 dient dazu, dass ein gewisser Vorrat des Trägerbandes 1, 1' angelegt wird, um trotz des Spleißvorgangs, der in der Regel ein kurzzeitiges Stillsetzen der Speicherrollen 17 mit sich zieht, das Etikettieren fortsetzen zu können. Während des Spleißvorgangs wird also von den Speicherrollen 17, 17' in der Regel kein Etikettenband abgezogen, sondern es erfolgt eine Verwendung von Etiketten aus dem Etikettenbandspeicher 23.

Im Weiteren wird das Trägerband 1 in Richtung des Pfeils 32 zu einer Spendekante 18 transportiert, wo es stark umgelenkt wird, so dass sich die Etiketten 2 vom Trägerband 1 lösen und so an die zu etikettierenden Behälter (die hier nicht dargestellt sind) übergeben werden können. Das etikettenlose Trägerband 1 wird alsdann in Richtung des Pfeils 33 zur Vorrichtung 10 weitergeleitet, wo es dann dem Etikettenleerbandspeicher zugeführt wird.

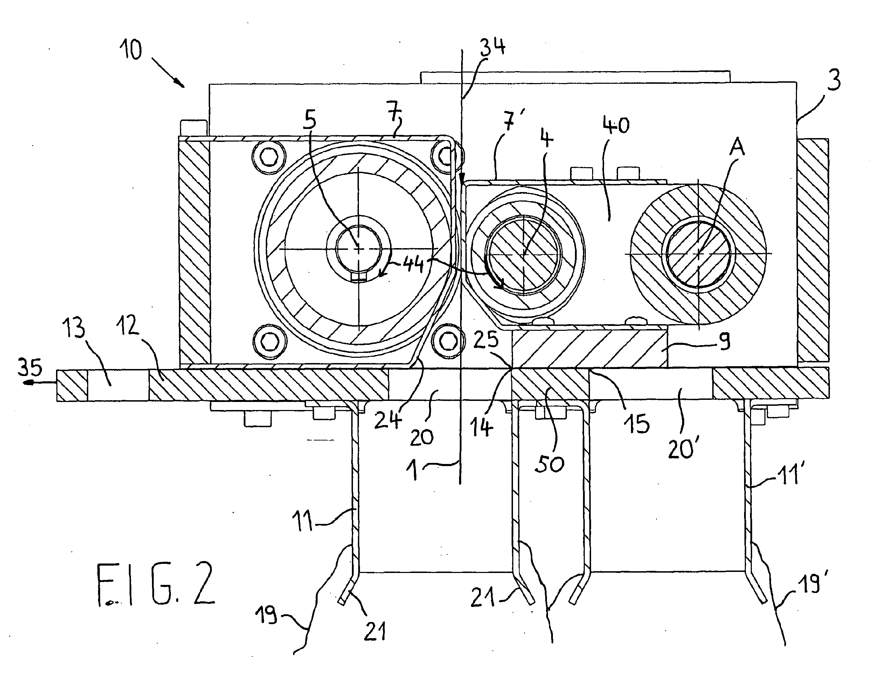

Fig. 2 zeigt die Vorrichtung 10 in einer Schnittdarstellung von der Seite. Dabei wird das Trägerband 1 von oben in Richtung des Pfeils 34 nach unten durch die Vorrichtung 10 transportiert. Die Vorrichtung 10 weist dabei einen Rahmen 3 auf, an dem die nachfolgenden Gegenstände befestigt bzw. gelagert sind.

Es sind die beiden Nutwalzen 5 und 4 zu sehen, wobei die Nutwalze 5 einen größeren Durchmesser aufweist als die Nutwalze 4. Die beiden Nutwalzen 4, 5 sind dabei so zueinander angeordnet, dass sie sich teilumfänglich berühren und somit das an deren Berührungsfläche vorbeigeführte Trägerband 1, einklemmen und kraftschlüssig transportieren. Sie bewegen sich dabei in einer Richtung gemäß dem Pfeil 44.

Die Nutwalzen 4, 5 sind dabei von Abweiselementen 7, 7ʹ umgeben, die in einem erweiterten Berührungsbereich der beiden Walzen 4, 5 in die Nuten hineinragen. Die Abweiselemente 7, 7' sind also zumindest in diesem Bereich als Rechen ausgebildet. Sie erhöhen die Funktionssicherheit der Vorrichtung 10 enorm, da Störeinflüsse, wie z.B. sich noch auf dem Trägerband 1 befindliche Etiketten, eliminiert werden, indem sie von den Abweiselementen 7, 7ʹ aufgefangen bzw. abgewiesen werden, ohne sich um die Nutwalzen 4, 5 zu wickeln. Das Abweiselement 7ʹ ist an einem Sicherungselement 9 befestigt, das wiederum Teil des Rahmens 3 ist.

Stromabwärts der Nutwalzen 4, 5 befindet sich ein Wechselrahmen 12 der an einer Seite einen Handgriff 13 aufweist. Der Wechselrahmen 12 weist zusätzlich zwei Aussparungen 20, 20ʹ auf, die jeweils mit einer der Bandleiteinrichtungen 11, 11ʹ in Wirkverbindung stehen.

In Fig. 2 ist eine Situation dargestellt, in der das Trägerband 1 von den Nutwalzen 4, 5 in Richtung des Pfeils 34 nach unten durch die Aussparung 20 und die Bandleiteinrichtung 11 in einen hier als Sack dargestellten Etikettenleerbandspeicher 19 transportiert wird. Der Etikettenleerbandspeicher 19 ist mit Hilfe einer hier nicht gezeigten Halteeinrichtung, wie z.B. einem Magneten, einem Gummi, einer Klammer oder dgl. an den Halteblechen 21 der Bandleiteinrichtung 11ʹ befestigt. Die Bandleiteinrichtungen 11, 11ʹ dienen hier also als Sackhalter.

Durch den immer währenden Transport des Trägerbandes 1 in den Etikettenleerbandspeicher 19 wird ein Druck erzeugt, der das Trägerband 1 in dem Speicher komprimiert. Ist der Etikettenleerbandspeicher 19 aber voll, so muss ein Wechsel erfolgen. Dazu wird der Wechselrahmen 12 mit Hilfe des Handgriffs 13 in Richtung des Pfeils 35 verschoben. Dadurch wird die Bandleiteinrichtung 11ʹ in die Position gebracht, in der vorher die Bandleiteinrichtung 11 war. So kann nun ein Befüllen des Etikettenleerbandspeichers 19' erfolgen, während der Etikettenleerbandspeicher 19 ausgewechselt wird.

Durch das Verschieben des Wechselrahmens 12 in Richtung des Pfeils 35 wird gleichzeitig das Trägerband 1 durch die aneinander Vorbeibewegung des Schneidelements 14 und des Gegenelements 24 durchtrennt. Ist zu einem späteren Zeitpunkt der Etikettenleerbandspeicher 19' voll, so wird der Wechselrahmen 12 entgegen des Pfeils 35 bewegt, so dass die Position der Bandleiteinrichtung 11 wieder so ist, wie sie in Figur 2 dargestellt ist. Bevor die Rückführung des Wechselrahmens 12 in die Ausgangsposition wie soeben beschrieben durchgeführt wird, muss selbstverständlich der Etikettenleerbandspeicher 19 ausgewechselt werden.

Auch bei der Rückführung des Wechselrahmens 12 in die Ausgangsposition wird das Trägerband 1 durchtrennt, da es an dem Schneidelement 15 und dem Gegenelement 25 geschnitten wird. Das Gegenelement 25 befindet sich dabei an dem unteren Ende des Sicherungselements 9. Das Schneidelement 14 befindet sich an der linken Oberseite des Steges 50 des Wechselrahmens 12 zwischen den beiden Bandleiteinrichtungen 11, 11'. Das Schneidelement 15 befindet sich an der rechten Oberseite des Steges 50 des Wechselrahmens 12 zwischen den beiden Bandleiteinrichtungen 11, 11ʹ, während sich das Gegenelement 24 an der Unterseite des Abweiselements 7 befindet.

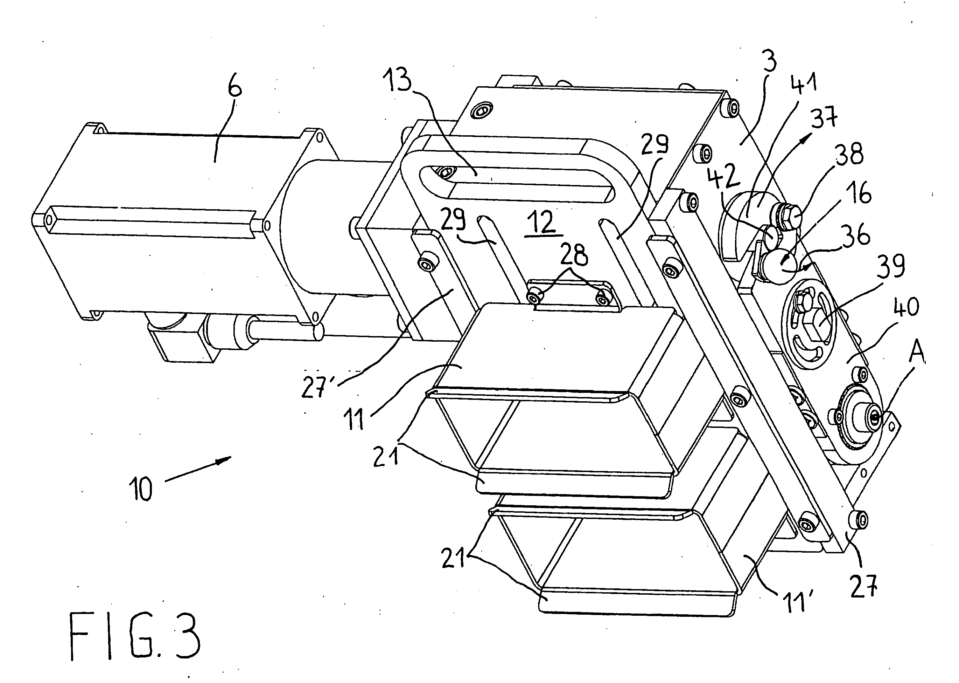

Figur 3 zeigt eine isometrische Ansicht der Vorrichtung 10 von unten, wobei hier der Motor 6 der Walze 5 gut zu erkennen ist. Außerdem ist der Wechselrahmen 12 mit dem Handgriff 13 zu sehen, der unterhalb des Rahmens 3 der Vorrichtung 10 in zwei Schienen 27, 27ʹ geführt wird. Die Bandleiteinrichtung 11 ist mit Schrauben 28 an dem Wechselrahmen 12 befestigt. Der Wechselrahmen 12 weist zudem zwei Schiebenuten 29 auf, anhand derer ein sicheres Verschieben des Wechselrahmens 12 in Richtung des Pfeils 35 gewährleistet ist.

Um die Zugänglichkeit der beiden Nutwalzen 4, 5 zu gewährleisten, ist ein Schwenkmechanismus 40 vorgesehen. Zum Schwenken wird ein Verriegelungsmechanismus 16 in Richtung des Pfeils 36 bewegt, so dass der sich am linken Ende des Schwenkmechanismus 40 befindliche Haken 41 in Richtung des Pfeils 37 um die Drehachse A verschwenkt werden kann. Da die Walze 4 in diesem Schwenkmechanismus 40 gelagert ist, wird diese durch die soeben beschriebene Bewegung verschwenkt, wodurch eine Zugänglichkeit der beiden Walzen 4, 5 gewährleistet ist.

Das Einschwenken der Walze 4 geht dabei so vonstatten, dass der Schwenkmechanismus 40 entgegen der Richtung des Pfeils 37 um die Drehachse A geschwenkt wird, so dass der Haken 41 des Schwenkmechanismus 40 in das Zylinderelement 42, das sich am Ende der Walze 5 befindet, einrastet. Alsdann wird der Verriegelungsmechanismus 16 entgegen des Pfeils 36 um den Drehpunkt 38 verschwenkt und an dem Zylinderelement 42 befestigt. Die Nutwalze 4 ist an den Außenseiten mit einer Exzenterverstellung 39 versehen, um eine Zustellung in Richtung der Walze 5 vornehmen zu können. Dadurch wird eine bezüglich der Berührungskraft optimale Ineingriffnahme der beiden Nutwalzen 4, 5 gewährleistet.

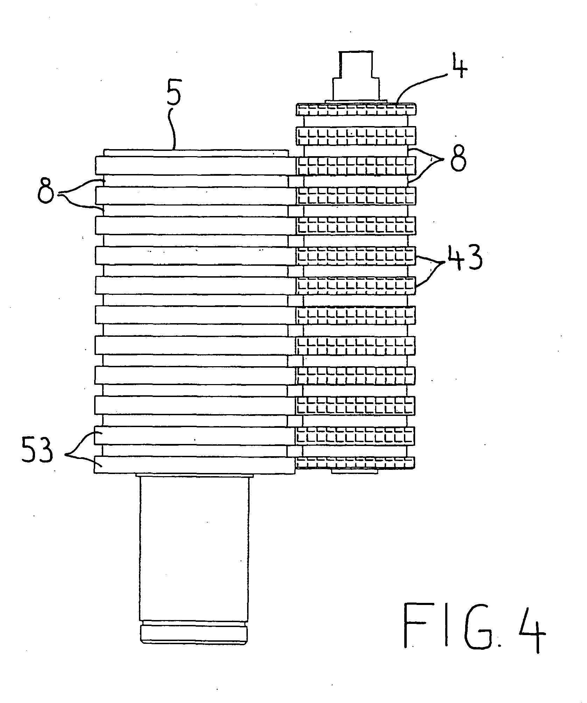

Figur 4 zeigt die beiden Nutwalzen 4, 5, die jeweils Nuten 8 in Umfangsrichtung aufweisen. Die Stege 53 der Nutwalze 5 sind aus Gummi, die Stege 43 der Nutwalze 4 sind aus gerändeltem Metall, wobei das Rändelmuster der Walze 4 in Figur 4 angedeutet ist. Die beiden Nutwalzen 4, 5 sind dabei so zueinander gestellt, dass sich die Stege 53 der Walze 5 und 43 der Walze 4 mit einer definierten Kraft berühren, so dass nur eine Nutwalze mit einem Motor 6 ausgestattet werden braucht, da der Antrieb der Nutwalze 4 indirekt durch die Nutwalze 5 erfolgt. Des weiteren hat dieses Aneinanderstellen der Nutwalzen 4, 5 den Vorteil, dass das Trägerband 1 kraftschlüssig weiter transportiert wird, sodass gegen einen sich im Etikettenleerbandspeicher durch das gespeicherte Trägerband 1 aufbauenden Druck gearbeitet werden kann.

Bei einer bevorzugten Ausführungsform ist zumindest eine Walze (4, 5) teilumfänglich mit einer Gummibeschichtung versehen. Bei einer weiteren bevorzugten Ausführungsform ist zumindest eine Walze (4, 5) zumindest teilumfänglich mit einer geriffelten Oberfläche versehen.

Wie oben erwähnt, ist an dem Wechselrahmen (12) vorteilhaft zumindest ein Schneidelement (14) angebracht.

Bevorzugt ist an dem Rahmen (3) oder an einem mit dem Rahmen (3) verbundenen Element mindestens ein Schneidelement (14, 15) angebracht.

Weiterhin ist vorteilhaft der Abstand der beiden Walzen (4, 5) zueinander veränderbar. Dabei ist es, wie oben erwähnt, möglich, dass eine Walze (4, 5) schwenkbar um eine Drehachse (A) angeordnet ist. Bevorzugt weist die schwenkbare Walze (4, 5) einen Verriegelungsmechanismus (16) aufweist, der ein ungewolltes Verschwenken verhindert.

Bei einem erfindungsgemäßen Verfahren zum etikettieren von Behältern mit einem Etikett (2), das sich auf einem Trägerband (1) befindet, wobei das Trägerband (1) von einer Speicherrolle (17) zu einer Spendekante (18) geführt wird, von wo aus das Etikett (2) an die an der Spendekante (18) vorbeigeführten Behälter übergeben wird und das Trägerband (1) von der Spendekante (18) zu einem Etikettenleerbandspeicher (19) abtransportiert wird, wird der Abtransport des Trägerbandes (1) unter zu Hilfenahme einer Vorrichtung (10) nach wenigstens einem der Ansprüche 1 bis 12 durchgeführt.

Bei einem weiteren bevorzugten Verfahren wird nach der Füllung des Etikettenleerbandspeichers (19) der Wechselrahmen (12) betätigt, wodurch eine andere Bandleiteinrichtung (11') in eine Position gebracht wird, in der sie mit den Walzen (4, 5) in Wirkverbindung steht, sodass der Abtransport des Trägerbandes (1) stromabwärts über die Walzen (4, 5) und die andere Bandleiteinrichtung (11ʹ) in einen anderen Etikettenleerbandspeicher (19ʹ) erfolgt.

Bevorzugt wird durch die Betätigung des Wechselrahmens (12) zumindest ein Schneidelement (14, 15) betätigt, das das Trägerband (1) durchtrennt.

## Patentansprüche

1. Vorrichtung (10) zum Transportieren eines Etikettenbandes, wobei das Etikettenband zumindest ein Trägerband (1) umfasst, mit einem Rahmen (3) und mit mindestens zwei an dem Rahmen (3) angebrachten Walzen (4, 5), durch die das Trägerband eingeklemmt und kraftschlüssig transportiert wird, wobei die beiden Walzen (4, 5) Nuten (8) aufweisen,
**dadurch gekennzeichnet, dass**
stromabwärts der Walzen (4, 5) zumindest eine kanalförmige Bandleiteinrichtung (11, 11'), deren Ende in Wirkzusammenhang mit einem Etikettenleerbandspeicher (19, 19') steht, vorgesehen ist.

2. Vorrichtung (10) nach Anspruch 1,
**dadurch gekennzeichnet, dass**
die erste Walze (4, 5) durch einen Motor (6) antreibbar ist, während die zweite Walze (4, 5) indirekt über die erste Walze (5, 4) antreibbar ist.

3. Vorrichtung (10) nach Anspruch 1,
**dadurch gekennzeichnet, dass**
die erste und die zweite Walze (4, 5) durch die das Trägerband eingeklemmt und kraftschlüssig transportiert wird, je einen eigenen Motor (6) antreibbar ist.

4. Vorrichtung (10) nach wenigstens einem der vorhergehenden Ansprüche,
**dadurch gekennzeichnet, dass**
sich die beiden Walzen (4, 5) zumindest teilumfänglich berühren.

5. Vorrichtung (10) nach wenigstens einem der vorhergehenden Ansprüche,
**dadurch gekennzeichnet, dass**
zumindest eine Walze (4, 5) mit einer den Reibungskoeffizient erhöhenden Beschichtung versehen ist.

6. Vorrichtung (10) nach wenigstens einem der vorhergehenden Ansprüche,
**dadurch gekennzeichnet, dass**
die erste Walze (4) mit einer gummierten Oberfläche und die zweite Walze (5) mit einer geriffelten Oberfläche versehen ist.

7. Vorrichtung (10) nach wenigstens einem der vorhergehenden Ansprüche,
**dadurch gekennzeichnet, dass**
eine Walze (4, 5) ein Abweiselement (7) aufweist, das zumindest teilumfänglich in die Nuten (8) eingreift.

8. Vorrichtung (10) nach einem der Ansprüche 1 bis 6,
**dadurch gekennzeichnet, dass**
beide Walzen (4, 5) Abweiselemente (7, 7') aufweisen, die zumindest teilumfänglich in die Nuten (8) eingreifen.

9. Vorrichtung (10) nach einem der vorangegangenen Ansprüche,
**dadurch gekennzeichnet, dass**
jeder Bandleiteinrichtung (11, 11') ein Etikettenleerbandspeicher (19, 19') zugeordnet ist.

10. Vorrichtung (10) nach einem der vorangegangenen Ansprüche,
**dadurch gekennzeichnet, dass**
stromabwärts der Walzen (4, 5) zwei Bandleiteinrichtungen (11, 11') vorgesehen sind, wobei diese an einem Wechselrahmen (12) befestigt sind.

11. Vorrichtung (10) nach Anspruch 10,
**dadurch gekennzeichnet, dass**
der Wechselrahmen (12) positionsveränderlich ist, wobei er mindestens so viele Positionen aufweist, wie Bandleiteinrichtungen (11, 11') vorhanden sind.

12. Vorrichtung (10) nach wenigstens einem der Ansprüche 10 bis 11,
**dadurch gekennzeichnet, dass**
der Wechselrahmen (12) so ausgebildet ist, dass in jeder Position eine Bandleiteinrichtung (11, 11') so angeordnet ist, dass ein Wirkzusammenhang zwischen Walzen (4, 5) und Bandleiteinrichtung (11, 11') besteht.

13. Verfahren zum Etikettieren von Behältern mit einem Etikett (2), das sich auf einem Trägerband (1) befindet, wobei das Trägerband (1) von einer Speicherrolle (17) zu einer Spendekante (18) geführt wird, von wo aus das Etikett (2) an die an der Spendekante (18) vorbeigeführten Behälter übergeben wird und das Trägerband (1) von der Spendekante (18) zu einem Etikettenleerbandspeicher (19) abtransportiert wird,
**dadurch gekennzeichnet, dass**
der Abtransport des Trägerbandes (1) unter zu Hilfenahme einer Vorrichtung (10) nach wenigstens einem der Ansprüche 1 bis 12 durchgeführt wird.

## Claims

1. Apparatus (10) for transporting a label strip, the label strip comprising at least one carrier strip (1), said apparatus comprising a frame (3) and at least two rollers (4, 5) attached to the frame (3), wherein the carrier strip (1) is clamped and nonpositively transported by the rollers, wherein the two rollers (4, 5) have grooves (8),
**characterised in that**
at least one channel-like strip guiding device (11, 11ʹ) is provided downstream of the rollers (4, 5), the end of which is actively connected to a label-devoid strip store (19, 19ʹ).

2. Apparatus (10) according to claim 1, **characterised in that** the first roller (4, 5) can be driven by a motor (6), while the second roller (4, 5) can be driven indirectly via the first roller (5, 4).

3. Apparatus (10) according to claim 1, **characterised in that** the first and the second roller (4, 5) can each be driven by a dedicated motor (6).

4. Apparatus (10) according to at least one of the preceding claims, **characterised in that** the two rollers (4, 5) make contact at least over part of their circumference.

5. Apparatus (10) according to at least one of the preceding claims, **characterised in that** at least one roller (4, 5) is provided with a coating which increases the coefficient of friction.

6. Apparatus (10) according to at least one of the preceding claims, **characterised in that** the first roller (4) is provided with a rubberised surface and the second roller (5) is provided with a fluted surface.

7. Apparatus (10) according to at least one of the preceding claims, **characterised in that** one roller (4, 5) has a scraper element (7) which engages in the grooves (8) at least over part of the circumference.

8. Apparatus (10) according to one of the preceding claims 1 to 6, **characterised in that** both rollers (4, 5) have scraper elements (7, 7ʹ) which engage in the grooves (8) at least over part of the circumference.

9. Apparatus (10) according to at least one of the preceding claims, **characterised in that** each strip guiding device (11, 11ʹ) is assigned a label-devoid strip store (19; 19ʹ).

10. Apparatus (10) according to one of claims 11 to 13, **characterised in that** two strip guiding devices (11, 11ʹ) are provided downstream of the rollers (4, 5), said strip guiding devices being attached to an exchangeable frame (12).

11. Apparatus (10) according to claim 10, **characterised in that** the position of the exchangeable frame (12) can be varied, said exchangeable frame having at least as many positions as there are strip guiding devices (11, 11ʹ).

12. Apparatus (10) according to at least one of claims 10 to 11, **characterised in that** the exchangeable frame (12) is designed so that, in each position, one strip guiding device (11, 11ʹ) is arranged in such a way that an active connection exists between the rollers (4, 5) and the strip guiding device (11, 11ʹ).

13. Method for labelling containers with a label (2) which is located on a carrier strip (1), the carrier strip (1) being fed from a storage roll (17) to a dispensing edge (18), from where the label (2) is transferred to the container guided past the dispensing edge (18) and the carrier strip (1) is transported away from the dispensing edge (18) to a label-devoid strip store (19), **characterised in that** the carrier strip (1) is transported away by means of an apparatus (10) according to at least one of claims 1 to 12.

## Revendications

1. Dispositif (10) pour le transport d'une bande d'étiquettes, ladite bande d'étiquettes comprenant au moins une bande support (1), avec un cadre (3) et au moins deux cylindres (4, 5) montés sur le cadre (3), au moyen desquels la bande support est serrée et transportée par friction, les deux cylindres (4, 5) étant pourvus de rainures (8),
**caractérisé**
**en ce qu'**au moins un dispositif de guidage de bande (11, 11') en forme de canal et dont l'extrémité coopère avec un magasin de bande d'étiquettes vide (19, 19') est prévu en aval des cylindres (4, 5).

2. Dispositif (10) selon la revendication 1,
**caractérisé**
**en ce que** le premier cylindre (4, 5) est entraînable par un moteur (6), alors que le deuxième cylindre (4, 5) est entraînable indirectement par l'intermédiaire du premier cylindre (5, 4).

3. Dispositif (10) selon la revendication 1,
**caractérisé**
**en ce que** le premier et le deuxième cylindres (4, 5) sont entraînables chacun par un moteur (6) propre.

4. Dispositif (10) selon au moins une des revendications précédentes,
**caractérisé**
**en ce que** les deux cylindres (4, 5) sont en contact au moins sur une partie de leur circonférence.

5. Dispositif (10) selon au moins une des revendications précédentes,
**caractérisé**
**en ce qu'**au moins un cylindre (4, 5) est pourvu d'un revêtement qui accroît le coefficient de friction.

6. Dispositif (10) selon au moins une des revendications précédentes,
**caractérisé**
**en ce que** le premier cylindre (4) est pourvu d'une surface caoutchoutée et le deuxième cylindre (5) d'une surface cannelée.

7. Dispositif (10) selon au moins une des revendications précédentes,
**caractérisé**
**en ce qu'**un cylindre (4, 5) comporte un élément de détachement (7) qui s'engage dans les rainures (8) au moins sur une partie de sa circonférence.

8. Dispositif (10) selon l'une des revendications 1 à 6,
**caractérisé**
**en ce que** les deux cylindres (4, 5) comportent des éléments de détachement (7, 7') qui s'engagent dans les rainures (8) au moins sur une partie de leur circonférence.

9. Dispositif (10) selon l'une des revendications précédentes,
**caractérisé**
**en ce qu'**à chaque dispositif de guidage de bande (11, 11') est associé un magasin de bande d'étiquettes vide (19, 19').

10. Dispositif (10) selon l'une des revendications précédentes,
**caractérisé**
**en ce que** deux dispositifs de guidage de bande (11, 11') sont prévus en aval des cylindres (4, 5), ceux-ci étant fixés sur un cadre remplaçable (12).

11. Dispositif (10) selon la revendication 10,
**caractérisé**
**en ce que** la position du cadre remplaçable (12) peut être changée, celui-ci présentant au moins autant de positions qu'il est prévu de dispositifs de guidage de bande (11, 11').

12. Dispositif (10) selon au moins une des revendications 10 et 11,
**caractérisé**
**en ce que** le cadre remplaçable (12) est réalisé de telle manière que dans chaque position, un dispositif de guidage de bande (11, 11') est disposé de manière à obtenir une coopération entre les cylindres (4, 5) et le dispositif de guidage de bande (11, 11').

13. Procédé d'étiquetage de récipients avec une étiquette (2), ladite étiquette se trouvant sur une bande support (1), ladite bande support (1) étant guidée d'un cylindre de stockage (17) à un bord de distribution (18), l'étiquette (2) étant transférée dudit bord de distribution (18) aux récipients passant devant le bord de distribution (18), et la bande support (1) étant évacuée du bord de distribution (18) vers un magasin de bande d'étiquettes vide (19),
**caractérisé**
**en ce que** l'évacuation de la bande support (1) est effectuée au moyen d'un dispositif (10) selon au moins une des revendications 1 à 12.
